# EUROPEAN PATENT APPLICATION

(11) **EP 0 543 168 A1**
(43) Date of publication of application: **26.05.1993**
(21) Application number: 92118077.4
(22) Date of filing: 22.10.1992
(51) Int. Cl.: G21C 11/08

(54) **A thermic insulation for generic surfaces immersed in a fluid**

(30) Priority: 19.11.1991 IT MI913085
(71) Applicant: FINMECCANICA S.p.A. AZIENDA ANSALDO, I-16128 Genova (IT)
(72) Inventor: Cinotti, Luciano, I-16036 Recco (Genova) (IT)
(74) Representative: Perani, Aurelio

(57) **Abstract**

A thermic insulation (2) for generic surfaces (1) immersed in a fluid comprises a plurality of sheet-like elements (3) secured protrudingly on a surface (1) to be insulated, along a respective attachment side (6a) and at a predetermined inclination angle (A). Advantageously, the sheet-like elements (3) may be in the form of a band comprising a plurality of sheet metal strips (4) packed together and spaced at a distance one from each other.

## Description

This invention relates to a thermic insulation for generic surfaces immersed in a fluid.

In many current technical applications, it is necessary to provide the thermic insulation of surfaces being licked, in particular, by liquids which are cooler than the surfaces; with such operating conditions, it is impossible to use ordinary insulating materials, such as rock wool, which are incompatible with liquids.

From Italian Patent Application No. 12545-A/88, it is known a thermic insulation of a cylindrical pressure vessel immersed in a pool full of water, said vessel containing a nuclear reactor core safely arranged inside.

Such a vessel has been thermically insulated by providing its surface with metal panels, which are secured on the cylindrical vessel surface with the aid of welded supports. The panels are fitted all over the vessel surface with a distribution which can be considered silimar to the one of the tiles on a roof.

The constructional solution proposed by the above-mentioned patent application has some limitations and negative outcomes.

Primarily, the thermic insulation afforded by said panels, as secured by riveting, is in general inadequate. In fact, this inadequacy of the thermic insulation takes origin in the heat transfer brought about by the convective motions set up through the cool liquid which close to the hot surface of the vessel is allowed to flow upwards, through interstices defined between each riveted panel and the surface.

Another drawback of the thermic insulation according to the above prior art is the risk that the panels may come off the vessel surface after some time and, once so released, drift away to obstruct water channels of vital importance for the reactor safety; this occurrence acquires a special relevance for nuclear plants and, therefore, also for the one described in the aforesaid patent application.

The underlying technical problem of this invention is to provide a thermic insulation for surfaces licked by a fluid, whether gaseous or liquid in nature, being at a lower temperature than said surfaces, which insulation can obviate the aforesaid drawbacks of prior art.

This problem is solved by a thermic insulation being characterized as in the first claim.

Further features and the advantages of the invention will become apparent from the following detailed description of an embodiment of the invention, given by way of example and not of limitation with reference to the accompanying drawings, in which:
Figure 1 is a perspective view of a cylindrical vessel incorporating a thermic insulation according to the invention;
Figure 2 is a cross-sectional view taken through a first embodiment of a detail of the insulation in Figure 1;
Figures 3, 4 and 5 are detailed cross-sectional views of respective embodiments of surface thermic insulations according to the invention; and
Figure 6 is a cross-sectional view of a second embodiment of the detail shown in Figure 2.

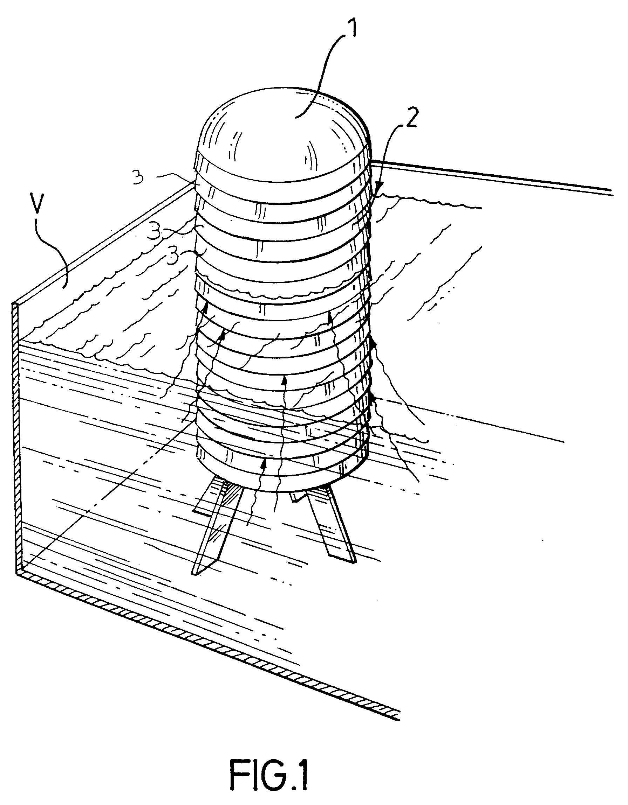

With reference to the drawing views, and in particular to Figure 1, generally shown at 1 is a cylindrical vessel fitted with a thermic insulation 2 according to this invention; in this example, the vessel 1, which is immersed in water contained in a pool V, is hotter than the water submerging it.

The thermic insulation 2 comprises a band 3 wrapped helically around the vessel 1, as explained hereinafter.

The band 3 comprises a plurality of sheet metal strips 4 packed together; said strips are provided with respective ribs 5, protruding from their surfaces and being active to hold them mutually apart, within the packed arrangement, leaving spaces S between strips laid side-by-side.

In a preferred embodiment of the invention, the band 3 includes a bearing strip 6 made of a metal sheet thicker than the other strips; respective upper edges 4a of the strips 4 are fastened longitudinally to the bearing strip 6, in this example by means of welding. Said upper edges 4a extend parallel to a corresponding upper edge 6a of the bearing strip 6.

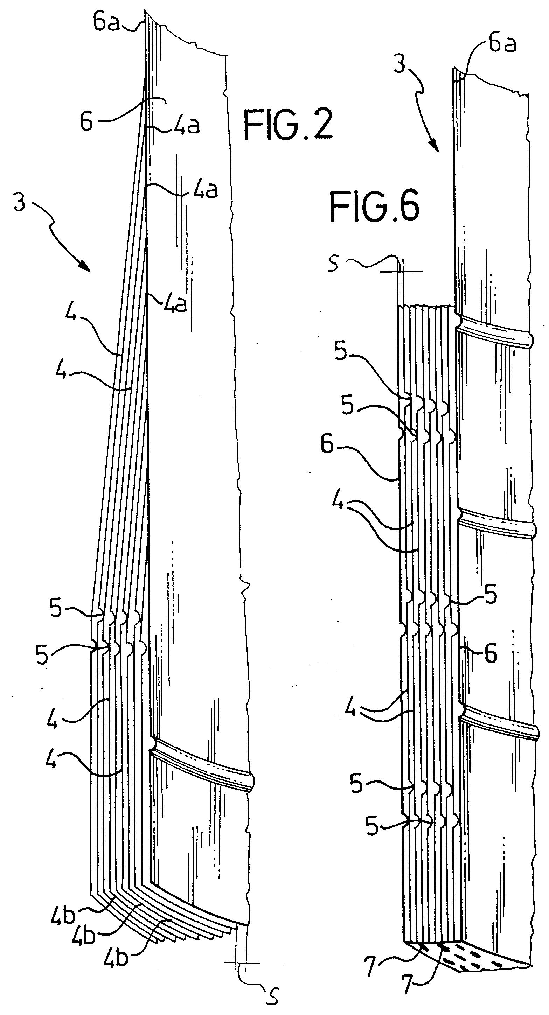

More specifically, as visible in the sectional view of the band shown in Figure 2, the sheet metal strips 4 overlap each other and have their respective upper edges 4a staggered from the upper edge 6a of the bearing strip 6; in addition, they fan out from the upper edge 4a to a respective lower edge 4b of each strip.

In a preferred embodiment, the band 3 is attached to the wall of the vessel 1 by means of welded seam extending along the upper edge 6a of the bearing strip 6.

The band 3 extends off the cylindrical wall of the vessel 1, with a predetermined inclination defined by an angle A measured between the generatrixes lines of the cylindrical wall and the band cross-section.

As shown in Figure 1, each turn in the band helix defines substantially a conical frustum surface, which is also called "skirt" by the persons in the art.

The insulating action provided by the above-described thermic insulation 2, is carried out by preventing convective motions in the water which is close to the vessel and becomes heated in the vicinity of the vessel wall.

In fact, the band, jutting inclined around the vessel, stops the upward-directed convective motions of the water which flowing upwards, must stop where the upper edge 6 of the band 3 is fastened to the vessel. Further, the water is trapped within the spaces S provided between packed strips and stagnates therein.

As a direct consequence of the general stop of water convective motions and of water stagnation in the spaces between strips, the heat transfer in the mass of water present in these spaces occurs by means of conduction rather than convection.

Stated otherwise, it is the water itself that acts as a thermic insulator for the vessel, by virtue of a water layer of predetermined thickness which bounds the wall of the vessel, being prevented from moving about.

This example of a thermic insulation according to the invention offers a number of additional advantages.

Noticeable among these is that it affords optimum introduction of the water into the gaps between sheet metal strips.

In this respect, it may be useful to observe that regions not filled by water usually form air accumulations, which expose the metal to the risk of corrosion.

The helicoidal pattern of the band provides, on the other hand, an unobstructed upward path of escape for the air as the water level rises during the pool filling, thereby avoiding for the insulation the hazard represented by the presence of air accumulations.

Furthermore, the fan-shape with open lower edges of the band sheet metal strips is effective, whenever the water requires to be drained off the pool, to let the water flow unrestrictedly out of the spaces between sheet metal strips since these spaces are not closed at their lower ends.

It is also to be emphasized the functional convenience of the inventive thermic insulation, which can be readily installed over surfaces of any shape, e.g. surfaces exhibiting structural or geometric discontinuities.

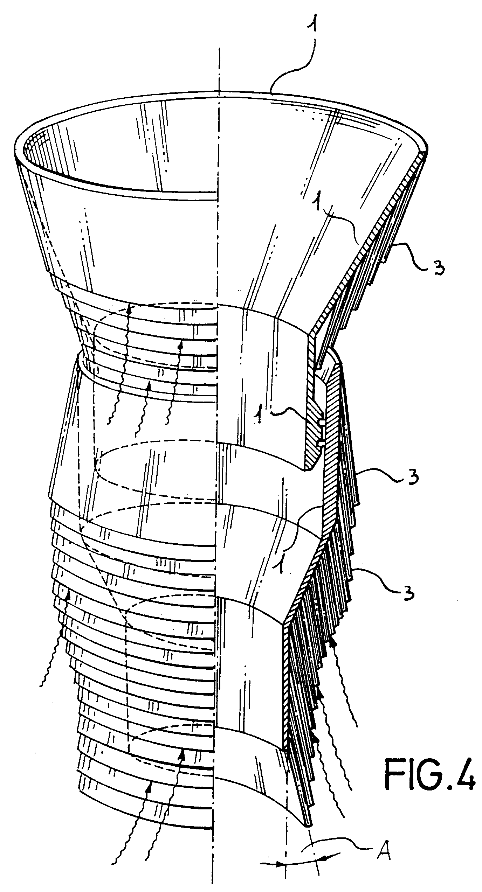

More particularly, and as shown in Figure 4, an insulation according to the invention can be readily arranged to cover contiguous surfaces set at different mutual inclinations.

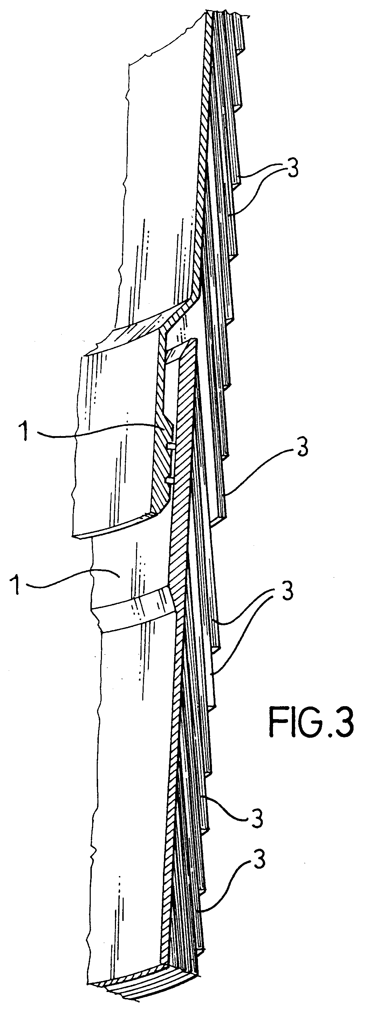

Further, the thermic insulation of this invention can also be used to thermally insulate the joints between different walls, being the like of the one shown in Figure 3, for example, without breaks in the insulation continuity along the walls involved by the joint.

It will be appreciated that an insulation according to the invention can also be applied to surfaces other than the cylindrical surface of the example considered. It is indeed possible, with just few modifications no further discussed herein, to make the inventive band be used for insulating flat walls, like walls of vessels having cube-like or other shapes, and more generally any concave or convex surface.

It also matters to observe that the predetermined inclination of the band, and hence of all the strips comprised in it, to the surfaces can be selected everytime in order to suit the form of the surface to be insulated, the temperatures involved and the fluid which licks the surface.

A further advantage of the inventive insulation is that it allows the insulating band to be welded to the vessel wall with no risk of mechanical stresses being induced therein by thermic expansion differential expansions due to the presence of temperature gradients through the band.

In fact, laying the band of this invention on a conical frustum surface, avoid that the areas of the band distant from the vessel, which are cooler and expand less than the edge welded on the vessel, constrain the larger delatations of said welded edge and the vessel.

Welding the band to the vessel is also beneficial from a constructional standpoint, because this operation can be performed more rapidly than the riveting of the insulating elements provided by the prior art.

A second embodiment of a band for thermic insulations according to the invention, will now be described with reference to Figure 6.

In that figure, elements structurally and functionally equivalent to those described in connection with the previous embodiment are denoted by the same reference numbers and will be no further discussed herein.

In this second embodiment of the insulating band, the bearing strip 6 is folded to take a substantially U-shape in cross-section; here again, said strip 6 has an upper edge 6a intended for attachment to a surface to be insulated.

The packed sheet metal strips 4 are received inside the fold of the U-shaped strip 6, thereby eliminating the need to fasten them individually to the bearing strip 6. The latter is provided downwardly with drain openings 7 to enhance the downflow of the water present in the spaces S between sheet metal strips 4.

This embodiment of insulating band performs in quite a similar manner to the previous embodiment; again, it is fastend into a helicoidal pattern, when the surfaces to be insulated are cylindrical, and may be applied to any surface, likewise the band of the previous embodiment.

It should be emphasized, finally, that the field of application of this invention may be considerably expanded: for example, the inventive insulation could be used with surfaces immersed in fluids other than water, such as air or another gas, since the same considerations raised herein above, would also be valid in such particular cases.

Above all, an insulation according to the invention could also be provided for surfaces being at a lower temperature than that of the fluid in which they are immersed.

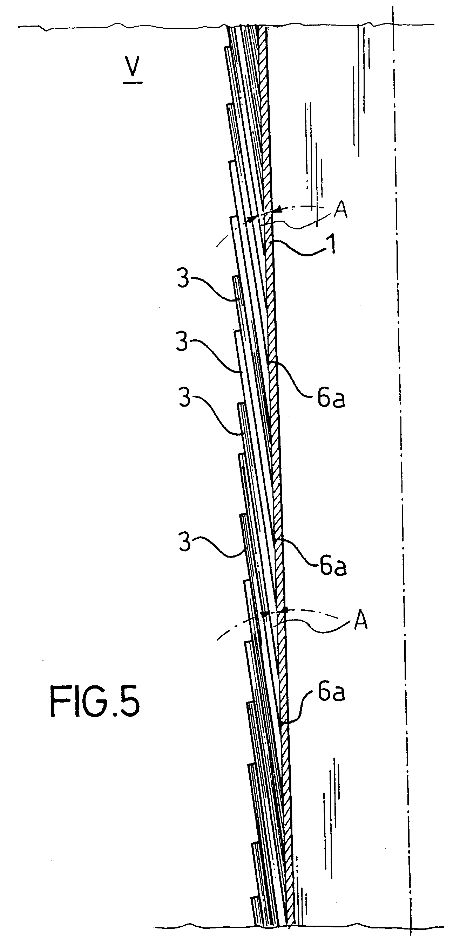

With reference to Figure 5, depicted therein by way of example, is a case where a cylindrical vessel as previously described has a cooler wall than the water submerging it in the pool V; applied helicoidally around the vessel is a band similar to those described above which, instead of jutting downwardly off the vessel wall, extends diverging in the upward direction from the wall to which it is attached along its edge 6a.

In this case, each turn in the helicoidal pattern of the band defines a substantially conical frustum surface which opens upwardly and is closed downwardly where it is attached to the vessel wall.

With a thermic insulation of the last-mentioned type, heated water licking the vessel wall is cooled and tends to flow downwards; the turns of conical frustum surface, being here open upwardly and closed downwardly, inhibit this circulation of the water and allow the insulation to perform in a similar manner to that previously described for a heated wall vessel immersed in cool water.

## Claims

1. A thermic insulation for generic surfaces (1) immersed in a fluid, characterized in that it comprises a plurality of sheet-like elements (3) secured protrudingly on a surface (1) to be insulated along a respective attachment side (6a), at a predetermined inclination angle (A) measured between the intercepting trace of a plane perpendicular to said attachment side (6a) with the surface (1) to be insulated and the trace of said plane with the sheet-like element (3).

2. A surface insulation according to Claim 1, characterized in that said sheet-like elements (3) are in the form of bands.

3. A surface insulation according to Claims 1 and 2, characterized in that each element (3) comprises a plurality of sheet metal strips (4) packed together and mutually spaced at a distance (d) in order to provide a space between each sheet metal strip (4) and the other.
